Europäisches Patentamt

European Patent Office

Office européen des brevets

(11) Publication number: **0 424 303 A2**

## EUROPEAN PATENT APPLICATION

(21) Application number: 90500076.6

(51) Int. Cl.⁵: **B60N 2/28**

(22) Date of filing: 30.07.90

(30) Priority: 20.10.89 ES 8903881
28.11.89 ES 8904053
18.12.89 ES 9000111

(43) Date of publication of application:
24.04.91 Bulletin 91/17

(84) Designated Contracting States:
BE DE FR GB IT NL SE

(71) Applicant: PLAY, S.A.
Independencia 255
E-08026 Barcelona(ES)

(72) Inventor: Jané Launes, Joaquin, C/o Play, S.A.
Independencia 255
E-08026 Barcelona(ES)

(74) Representative: Pastells Teixido, Manuel
c/o PASTELLS TEIXIDO, S.L. Pau Claris 138,
5-1a
E-08009 Barcelona(ES)

(54) Tiltable child's seat.

(57) A tiltable child's seat of the type comprising a base frame with which there is pivotably associated the seat member by way of a mechanism which locks different tilting positions thereof, characterised in that said locking mechanism is highly simplified on comprising two rotating horizontal shafts (9,7) transversely mounted below the front portion of the seat member (1) and in the intermediate portion of the frame base (4), respectively, said shafts being connected together by two telescopic columns (8) which, with their extension or retraction raise or lower the front portion of the seat member (1) tilting it to a greater or lesser extent on rotating about the points (2) of its back rest in the ends (3) of the side members of the post-superior extension of the frame (4), said columns (8) being locked in place by hydraulic or mechanical means provided with a manual control (13). If the hydraulic piston (11′) is strong, the telescopic columns (8) may be dispensed with.

Fig.1

## TILTABLE CHILD'S SEAT

This invention relates to a tiltable child's seat for installation on and attachment to the rear seat of an automobile.

Several types of child's seats for this purpose are known, the majority of which comprise a base frame, releasably attachable by belts to the vehicle seat, and seat member associated with said base by way of a tilting mechanism.

Different types of mechanism have been provided in such types of seats for the purposes of tilting, and are generally formed by several pivotably connected members manually operated by a lever control, which means having to expert great effort to change the angle of slope of the seat when the child is seated therein.

The majority of these mechanisms are, furthermore, complex, making the seat more expensive and spoiling its visual aspect.

The applicant hereof has attempted to solve these problems with the tiltable child's seats of the Spanish utility models nos. 287.400 and U8703105, without fully achieving it. Even in Spanish utility model no. 286.732, the company Play, S.A. registered a seat of the above type in which the mechanism was driven by an electric geared motor to avoid effort for the person who has to manipulate the seat, nevertheless this system suffers from technical problems which are hard to overcome.

A highly simplified, easy-to-handle mechanical system has been devised in the seat of the present invention with a view to automatically obtaining many positions of tilt of the seat on the base frame.

To this end, the mechanism comprises essentially two rotary horizontal shafts mounted transversely below the front portion of the seat and in the intermediate portion of the support frame base, respectively, said two shafts being associated together by two telescopic columns which, when extended and retracted, raise and lower the front portion of the seat and tilt it to a greater or lesser extent by pivoting thereof about the intermediate portion of its backrest in lateral points corresponding to the post-superior extension of the base frame.

The said telescopic columns are locked in the different points of extension by hydraulic or mechanical means, although preferably these means will consist of a hydraulic piston disposed between the two transverse shafts and provided with a hand or foot control for actuation thereof.

The mechanical locking means of the said extension of the telescopic columns which associate the seat member with the base frame, are preferably formed by a lever pivoted between the outer members of said two extensible columns, which lever is provided at one of the ends thereof with lateral pins which are inserted in respective orifices of the said outer members and which penetrate, selectively, in one of the several orifices provided along the inner members of said columns.

To ensure this coupling, the locking and unlocking lever is urged by spring means towards the active position thereof and the lever, at the end opposite that of the pins, forms the actuation control.

The invention contemplates the disposition between the two parallel transverse shafts of a rugged, strong hydraulic piston allowing the assembly of the two telescopic columns between said shafts to be dispensed with and, in turn, the shaft mounted below the seat member is embodied in a fixed form dispensing with the bearing bushings, the hydraulic piston being attached to said shaft by one of its ends, the other end of said hydraulic piston being fixedly attached directly to the fixed transverse shaft rotating in the frame base.

An axial pushbutton conveniently accesible from the front edge of the seat member has been provided for actuating the hydraulic piston.

These and other features will be better understood from the following detailed description, to facilitate which there are attached three sheets of drawings in which practical embodiments given only as a non limiting example of the scope of the invention have been shown.

In the drawings:

Figure 1 is a perspective view of the overall child's seat in a slightly inclined position.

Figure 2 shows said seat in side elevation and in a more inclined position.

Figure 3 is a perspective view of the front portion of the seat seen from below.

Figure 4 is a side view of the seat according to Figure 3 with the tilting mechanism partly in section.

Figure 5 is a perspective view of the seat in its most vertical position, in its simplified embodiment and with hydraulic locking means, and

Figure 6 is a side elevation view of the seat according to Figure 5 in its most tilted position.

According to such Figures, the seat shown comprises an integral unit 1 constituting the seat member as such, which pivots at lateral points 2 of the intermediate portion of its back rest in suitably flattened ends 3 of a U-shaped tubular base frame 4 bent angularly upwards from an intermediate portion of its side members.

This frame 4 is provided with two transverse shafts 5 connecting intermediate portions of the side members of its two parts, both the horizontal one and the raised rear one, said shafts 5 being terminated at both ends in corresponding bushings 6 which are those which are attached to the respective side members of the frame 4.

The transverse shaft 5 corresponding to the horizontal portion of the frame 4 is inserted in a freely rotatable cylindrical tubular sheath 7 to which the lower ends of two telescopic columns 8 are fixedly attached, the upper ends thereof being fixedly attached, in turn, to another transverse shaft 9, parallel to the former and capable of rotation in respective blind bushings 10 attached at the ends thereof and fixed below the lower front portion of the seat member 1.

The extension or retraction of the telescopic columns 8 raises or lowers the front portion of the seat member 1, inclining the latter to a greater or lesser extent as it rotates about the points 2 of pivoting in the flattened ends 3 of the side members of the frame 4.

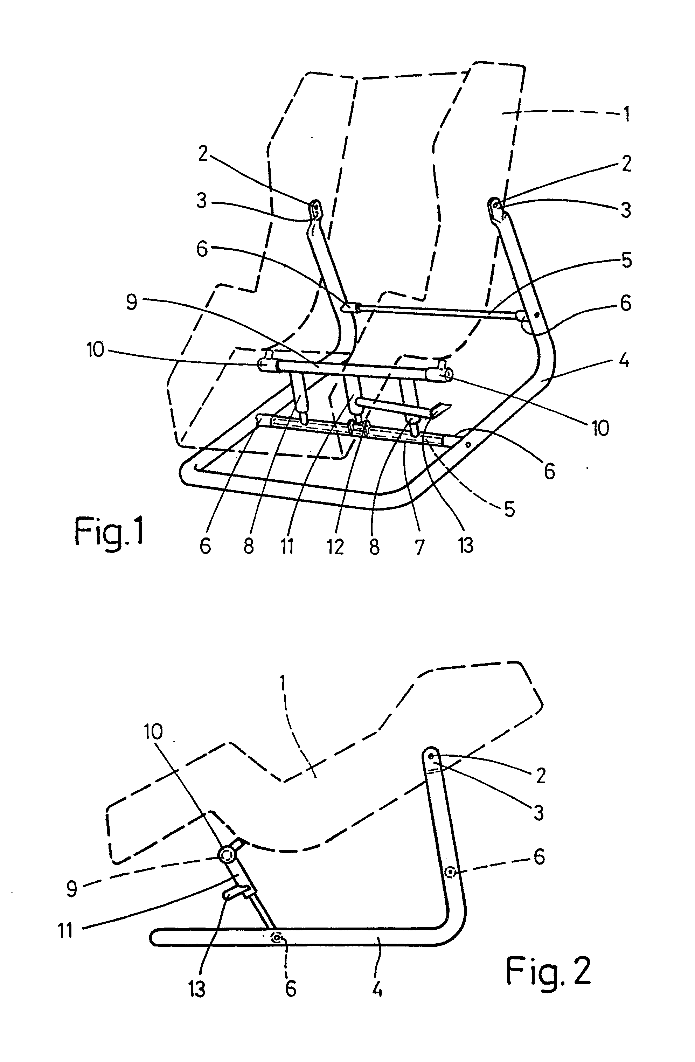

Between the telescopic columns 8 and parallel thereto, there is a hydraulic piston 11, the cylinder of which is fixedly attached to the shaft 9 and its piston is pivotably attached to two lugs 12 (Figure 1) fixedly attached to the tubular sheath 7, said piston 11 comprising a manual control 13, by operation of which the extension or retraction of the columns 8 is locked in the point deemed to be necessary, thereby defining one of the many fixed positions that the seat may adopt.

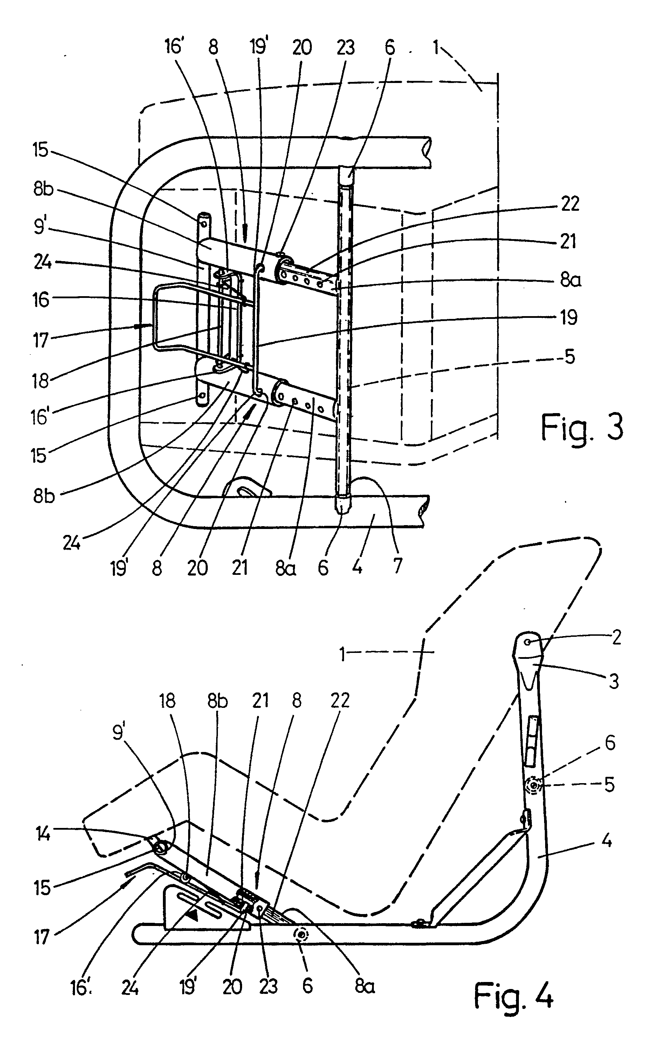

As seen in Figure 3, on the tubular sheath 7 there are fixedly attached the lower members 8a of the two telescopic columns 8, the outer members 8b of which are fixedly attached, in turn, to a transverse tube 9′ parallel to said tubular sheath 7 and fixed at the ends thereof under the lower front area of the seat member 1 through two bushings 14 and corresponding rivets 15.

Between the outer members 8b of the telescopic columns 8 there is disposed a flat bar 16, the ends of which are fixedly attached to said members 8b and in turn are extended outwardly and perpendicularly forming respective lugs 16′, between which a lever 17 for locking and releasing the positions of the seat 1 is pivotably mounted.

The lever 17 is formed by a U-shaped rod, to the intermediate portion and open end of which are fixedly attached two respective transverse rods 18 and 19, the first of which is mounted in the lugs 16′ and the second of which is terminated at the ends in corresponding pins 19′ which are inserted in respective orifices 20 of the members 8b and penetrate, selectively, in one of the several orifices 21 provided along the members 8a, which also comprise respective longitudinal side slots 22 in which the inner ends of corresponding rivets 23 attached to the members 8b move and which prevent accidental separation of the members 8a and 8b.

The locking of the different positions of the seat member 1 by operation of the lever 17 is ensured by two springs 24 coiled about respective ends of the rod 18, the ends of said springs being suitably extended and engaged against the arms of the lever 17 and the flat bar 16.

The tilting mechanism may also comprise a helical spring (not shown) disposed inside the telescopic columns 8, said spring aiding in the manoeuverability of the seat 1 when the child is seated therein, since the weight thereof makes rocking of the seat towards the more tilted positions difficult.

The whole locking and release mechanism for the seat tilting described is formed by metal members, although it may be also be formed by parts of injected plastics material, the outer members 8b of the column 8 forming an integral set with the transverse tube 9′ of the flat bar 16 and the lugs 16′, which would not have to extend of necessity from said flat bar but from the members 8b.

Likewise the inner members 8a would form an integral unit with the tubular sheath 7, the lever 17 being formed by a suitably formed plate having apertures for reducing material, which will be provided with lugs for pivoting in the corresponding lugs 16′ of the members 8b and small outwardly extending bolts which would operate as the pins 19′.

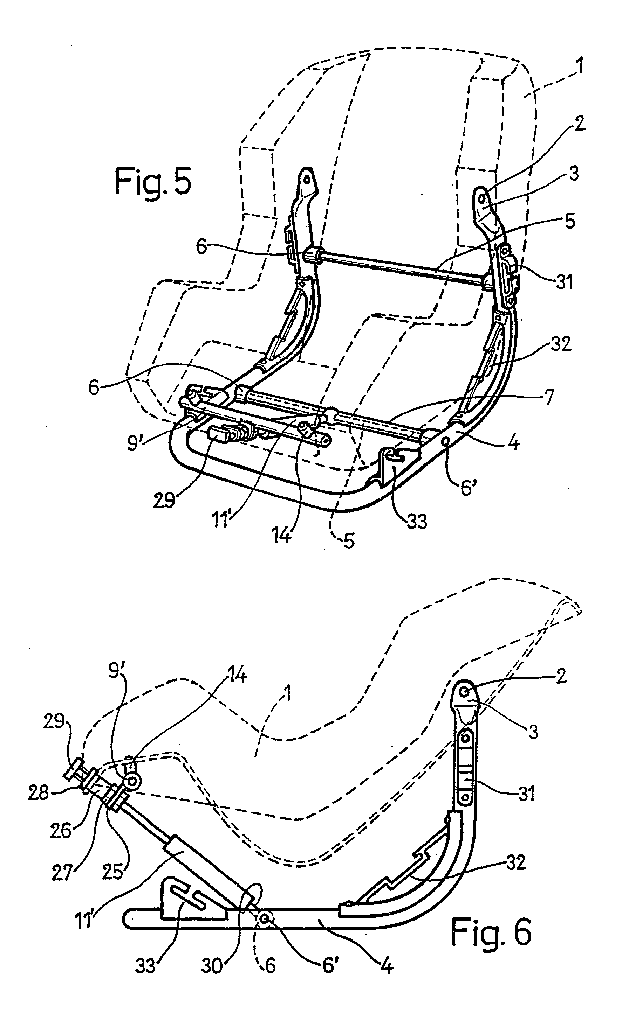

As shown in Figure 5 the bushing 6 with which the shafts 5 are terminated are fixed to the frame 4 by screws or rivets 6′, and the mechanism which with its extension and retraction rocks and tilts the seat member 1 and which at the same time locks the chosen position thereof, is formed solely by a rugged resistant hydraulic piston unit 11′, the piston of which is fixedly attached to the shaft 9′ fixed below the lower front portion of the seat member 1. The fixed connection is obtained by inserting said piston in a drilled lug 25 (Figure 6) welded to the shaft 9′ and assuring it by a sleeve 26 and nuts 27. This sleeve is terminated at the upper end with a perforated plate 28, where the push button 29 with which the hydraulic piston is operated is mounted and guided.

Access is gained to said push button 29 by the front edge of the seat, where an opening has been provided for assembly of the sleeve 26.

The other end of the hydraulic piston unit, i.e. the cylinder, is fixedly attached directly by a rod 30 to the tubular shaft 7 mounted on a shaft 5 of the horizontal part of the frame.

With this arrangement, to raise or lower the front portion of the seat member 1, in order to tilt it into different positions, it will be sufficient to press the push button 29 to release the hydraulic piston 11 and, then, pivot the seat member around the points 2 of the back rest until it is in the desired angle of tilt, at which time the push button 29 will be released so that the piston 11 may be locked again and thus the chosen seat position be ensured.

The references 31, 31 and 33 show guide members for the safety belts which will hold the child's seat on the front or rear seat of the automobile.

## Claims

1.- A tiltable child's seat, of the type comprising a base frame and a seat member pivotably associated together by a mechanism which locks different tilting positions of the seat member, characterised in that this mechanism comprises two parallel transverse shafts (9,7) at different heights and rotatably fixed at the lower front portion of the seat member (1) and at the intermediate portion of the base of the frame (4), respectively, which two shafts are connected together by telescopic columns (8) which with their extension and retraction cause the rocking and tilting of the seat member (1) as the latter rotates about lateral bearing points (2) of the intermediate portion of the back rest provided in the rear upper extension of the base frame (4), said mechanism being provided with means for locking different degrees of extension of the said telescopic columns.

2.- A tiltable child's seat, according to claim 1, characterised in that the locking means for the telescopic columns are formed by hydraulic piston means (11) provided with a control member (13) for operation thereof and which is installed between the two transverse shafts (9,7).

3.- A tiltable child's seat, according to claim 1, characterised in that the locking means for the telescopic columns are mechanical (17).

4.- A tiltable child's seat, according to claim 3, characterised in that the locking means are formed by a lever (17) pivotably mounted between the two outer members (8b) of the telescopic columns (8) and which have one of the ends thereof provided with lateral pins (19') which penetrate in respective orifices (20) of said outer members (8b) and which are selectively inserted in one of the orifices (21) provided along the inner members (8a) of the telescopic columns (8), with the other end of the lever (17) forming the operative control.

5.- A tiltable child's seat, according to claim 4, characterised in that the lever (17) for locking and releasing the telescopic columns (8) is urged by spring means (24) towrads its active locking position.

6.- A tiltable child's seat, according to claim 1, characterised in that the mechanism causing the rocking and tilting of the seat member (1) with its extension and retraction and which at the same time locks the chosen position is the hydraulic piston means (11') itself, which is sufficiently rugged and strong to allow the two telescopic columns (8) connecting the two transverse shafts (9',7) to be dispensed with.

7.- A tiltable child's seat, according to claims 1 and 6, characterised in that the transverse shaft (9') attached to the lower front portion of the seat member (1) is fixed, to which there is attached the hydraulic piston means (11') by one of the ends thereof, the piston being actuated by an axial pushbutton (29) which is accessible from the front edge of the seat member (1), the other end of the hydraulic piston means being fixedly attached directly to the transerve shaft (7) rotatively fixed in the frame base (4).

Fig.1

Fig.2

Fig. 3

Fig. 4

Fig. 5

Fig. 6